# EUROPÄISCHE PATENTSCHRIFT

(11) **EP 1 006 306 B1**
(45) Veröffentlichungstag und Bekanntmachung des Hinweises auf die Patenterteilung: **12.06.2002**
(21) Anmeldenummer: 98122572.5
(22) Anmeldetag: 03.12.1998
(51) Int. Cl.: F16L 27/11, F01N 7/18

(54) **Entkopplungselement für Schwingungen in Rohrleitungen, insbesondere Abgasanlagen**
Decoupling element for vibrations in pipes especially for for exhaust gas systems
Elément de découplage pour les vibrations dans les conduits notamment pour systèmes de gaz d'échappement

(43) Veröffentlichungstag der Anmeldung: 07.06.2000
(73) Patentinhaber: Burgmann Dichtungswerke GmbH & Co. KG, 82515 Wolfratshausen (DE)
(72) Erfinder: Friess, Werner, 80639 München (DE); Jahnel, Harald, 82538 Geretsried (DE); Vogt, Christian, 82057 Icking (DE); Morgner, Dietmar, 81671 München (DE)
(74) Vertreter: Schmidt, Horst, Dr.

(56) Entgegenhaltungen:
- EP-A- 0 828 064
- EP-A- 0 833 091
- EP-B- 0 747 582
- US-A- 5 299 837
- PATENT ABSTRACTS OF JAPAN vol. 018, no. 408 (M-1647), 29. Juli 1994 (1994-07-29) & JP 06 117243 A (SANGO CO LTD), 26. April 1994 (1994-04-26)

## Beschreibung

Die Erfindung betrifft ein Entkopplungselement für Schwingungen in Rohrleitungen, insbesondere Abgasanlagen von Brennkraftmaschinen, gemäss dem Oberbegriff des Patentanspruches 1.

Die Erfindung bezieht sich insbesondere auf ein fluiddichtes Entkopplungselement mit einem balgartig gewellten Verbindungselement, das axiale Längenänderungen und winkelmässige Verlagerungen zulässt, jedoch gegen mechanische Beanspruchungen, insbesondere Torsionsbeanspruchungen, empfindlich ist, die demzufolge bypassartig am Verbindungselement vorbeigeleitet werden müssen. Entkopplungselemente können nach Art der Ausgestaltung ihrer Gelenkfederanordnungen unterteilt werden in solche, bei denen die federnde Eigenschaft durch eine sich umfänglich der Mittenlängsachse des Entkopplungselementes erstreckende Schraubenfeder oder ein Drahtseilfederelement geschaffen ist, und solche, bei denen einzelne Federeinheiten vorgesehen sind. Beispiele für Entkopplungselemente der ersten Art sind in folgenden Druckschriften zu finden: DE-A-44 01 827, EP-A-0 432 436, EP-A-0 615 595, US-A-3 369 829, EP-B-747 582. Die Erfindung bezieht sich auf ein Entkopplungselement der zweiten Art, wie es beispielsweise aus der US-A-5 299 837 bekannt ist. Als Federeinheiten dienen drei an umfänglich versetzt zueinander angeordneten Stellen längs des Umfanges eines Rohranschlussstückes in einer radialen Ebene ringförmig angeordnete Seilfedereinheiten, die unabhängig voneinander jeweils einzeln mit dem Gehäuse bzw. dem Rohranschlussstück starr verbunden sind. Für die Unterbringung der Seilfedereinheiten ist ein hoher Platzbedarf zwischen dem Gehäuse und Rohranschlussstück erforderlich, so dass das bekannte Entkopplungselement eine grosse radiale Abmessung aufweist und damit dem Trend in der Automobilindustrie zu leichteren klein bemessenen Entkopplungselementen entgegenwirkt. Hinzu kommt, dass das balgartig gewellte empfindliche Verbindungselement nicht oder nur bedingt gegen Torsionsbeanspruchung geschützt ist. Aus der EP-B-0 816 738 ist ferner ein Entkopplungselement der zweiten Art bekannt, das gegenüber der vorbeschriebenen bekannten Anordnung den Vorteil eines montage- und fertigungsgünstigen Aufbaues bei gleichzeitig geringen baulichen Abmessungen hat, indem die Federeinheiten in Gestalt von drei umfänglich des Rohranschlussstückes angeordneten linearen Blattfedereinheiten ausgebildet ist, die endseitig am Gehäuse mit einem gewissen umfänglichen Spiel bzw. "schwimmend" abgestützt sind und das betreffende Rohranschlussstück nach Art einer Kreissekante mit Spiel durchsetzen. Die nicht spielfreie Ankopplung der Federeinheiten am Gehäuse bzw. Rohranschlussstück kann zu störenden Geräuschentwicklungen im Betrieb führen. Ferner kann durch die schwimmende Abstützung der Federeinheiten eine, wenn auch beschränkte, Relativverdrehung zwischen dem Rohranschlussstück und Gehäuse nicht vermieden werden und ist deshalb das empfindliche balgartige Verbindungselement gewissen Torsionsbeanspruchungen ausgesetzt, die zwar geringer als bei dem Entkopplungselement nach der vorerwähnten US-A-5 299 827 sind. jedoch dennoch standzeitverkürzende Auswirkungen haben können.

Die Erfindung stellt eine Verbesserung des Entkopplungselementes nach der EP-B-0 816 738 dar. Aufgabe der Erfindung ist demzufolge die Schaffung eines Entkopplungselementes mit einer Gelenkfederanordnung aus mehreren unabhängigen Blattfederelementen, das einen montage- und fertigungsgünstigen Aufbau hat, wobei ein erhöhter Schutz des balgartig gewellten Verbindungselementes gegen Torsionsbeanspruchungen bestehen soll. Weiter soll durch die Erfindung die Geräuschentwicklung seitens des Entkopplungselementes herabgesetzt werden und das Entkopplungselement mit einer weiteren Minimierung der baulichen Abmessungen bereitgestellt werden können.

Ein Entkopplungselement nach der Erfindung, das diese Aufgabe löst, ist Gegenstand des Patentanspruchs 1. Danach umfasst jede Gelenkfederanordnung zwei oder mehrere umfänglich des betreffenden Rohranschlussstücks verteilt angeordnete Federeinheiten oder -einrichtungen, die jeweils ein oder vorzugsweise mehrere Blattfederelemente umfassen und grundsätzlich voneinander unabhängige Bauteile darstellen. Anders als bei dem bekannten Entkopplungselement sind die Federeinrichtungen jedoch nicht "schwimmend", d.h. mit Spiel am Gehäuse bzw. Rohranschlussstück abgestützt, sondern spielfrei, so dass an der Übertragung der auf das Rohranschlussstück wirkenden Torsionskräfte auf das Gehäuse das empfindliche balgartige Verbindungselement, selbst in eingeschränktem Ausmass, nicht beteiligt ist. Das Verbindungselement wird dadurch sehr wirksam gegen Torsionsbelastungen jedweder Stärke geschützt. Gleichzeitig verhindert die spielfreie Ankopplung der Federeinrichtungen am Rohranschlussstück und Gehäuse das Auftreten von störenden Klappergeräuschen. Die spielfreie Ankopplung kann nach verschiedenen in den Unteransprüchen erwähnten Weiterbildungen der Erfindung in fertigungsgünstiger Weise geschaffen werden. Vorzugsweise überlappen die Endbereiche benachbarter Federeinrichtungen gehäuseseitig einander und bilden so einen gemeinsamen Kraftübertragungsbereich, der ohne schwächende oder fertigungsaufwendige Niet-, Bolzen- oder Schweissverbindungen ausgebildet werden kann, indem er nur auf Formschluss beruht. Dabei kann eine auf einen grösseren Flächenbereich verteilte Kraftüberleitung von einem Bauteil auf das benachbarte ermöglicht werden, was standzeitreduzierende Belastungsspitzen vermeidet. Ferner kann an den Kraftübertragungsbereichen durch diese Massnahmen gleichzeitig eine selbstausrichtende Eigenschaft für die Federeinrichtungen erzielt werden, was den Montagevorgang weniger empfindlich von der Einhaltung enger Fertigungstoleranzen macht. Wenn erwünscht, könnte jedoch auch eine Vernietung vorgesehen werden. Ausserdem sind die gehäuseseitigen Kraftübertragungsbereiche, was die Übertragung von Axialkräften betrifft, nicht starr sondern federelastisch ausgestaltet, so dass die Spielfreiheit in Umfangsrichtung keine oder eine nur geringfügige Auswirkung auf das Federverhalten der Federeinrichtungen ausübt. Die Nachgiebigkeit der Federeinrichtungen unter den einwirkenden Axialbeanspruchungen ist daher, ähnlich derjenigen des bekannten Entkopplungselementes, ebenso gewährleistet wie die natürliche schwingungsdämpfende Eigenschaft mehrerer zu einem Federpaket zusammengefasster Blattfederelemente, aus denen jede Federeinrichtung vorzugsweise gebildet ist. Gemäss einer besonders vorteilhaften Weiterbildung der Erfindung überlappen benachbarte Federeinrichtungen nicht nur einander, sondern hat jede Federeinrichtung ausserdem eine kreissegmentförmig gekrümmte Konfiguration. Die Federeinrichtungen können daher nach Art eines das Rohranschlussstück umgebenden Ringes in besonders platzsparender Weise angeordnet werden, um die baulichen Abmessungen des Entkopplungselementes zu minimieren.

Im übrigen wird bezüglich weiterer Ausgestaltungen der Erfindung auf die Patentansprüche verwiesen.

Die Erfindung wird nachfolgend anhand von Ausführungsformen und der Zeichnung näher erläutert. Es zeigen:
- Fig. 1: ein Entkopplungselement gemäss einer bevorzugten Ausführungsform der Erfindung in Seitenansicht,
- Fig. 2: eine längsgeschnittene Ansicht des Entkopplungselementes längs der Schnittlinie II-II in Fig. 1,
- Fig. 3: in Detailansicht eine Federeinrichtung des Entkopplungselementes nach Fig. 1,
- Fig. 3A: in vergrösserter fragmentarischer Ansicht eine Modifikation der in Fig. 3 gezeigten Federeinrichtung bei deren Verwendung in Verbindung mit einigen der in Fig. 4A-4D gezeigten Ausführungsformen von gehäuseseitigen Kraftübertragungsbereichen,
- Fig. 4A-4D: in geschnittenen fragmentarischen Teilansichten verschiedene Ausführungsformen von gehäuseseitigen Kraftübertragungsbereichen, und
- Fig. 5: in geschnittener fragmentarischer Teilansicht eine bevorzugte Ausführungsform eines rohranschlussstückseitigen Kraftübertragungsbereiches.

In der Zeichnung tragen gleiche oder ähnliche Bauteile die gleichen Bezugszeichen. Zwar wird nachfolgend die Erfindung in Verbindung mit einem Entkopplungselement beschrieben, bei dem nachgiebige Gelenkfederanordnungen, die dem Entkopplungselement Nachgiebigkeit wenigstens in axialer Richtung verleihen, an beiden axialen Enden vorgesehen sind, doch versteht es sich, dass im Rahmen der Erfindung auch das Vorsehen einer derartigen Anordnung an nur einem axialen Ende liegt, indem das andere axiale Ende starr mit einem benachbarten Rohransschlussstück verbunden ist.

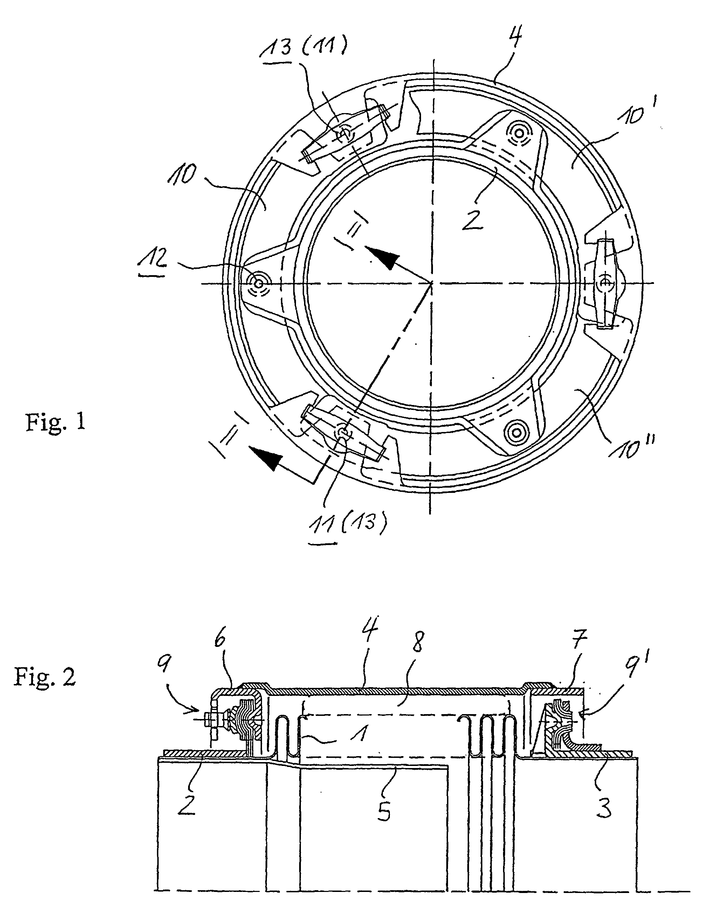

Zum grundsätzlichen Aufbau des Entkopplungselementes nach der Erfindung wird zunächst auf Fig. 1 und 2 Bezug genommen. Das Entkopplungselement umfasst ein Verbindungselement 1 aus einem geeigneten Material, wie Stahl, mit einem balgartig gewellten Abschnitt und beidseitig davon vorgesehenen rohrförmigen Endabschnitten, die mit jeweils einem Rohranschlussstück 2, 3 fest und abdichtend, z.B. durch Schweissen, verbunden sind. Mittels der Rohranschlussstücke 2, 3 kann das Entkopplungselement mit den Enden einer nicht gezeigten Abgasleitung einer Brennkraftmaschine verbunden werden.

In einem radialen Abstand vom Verbindungselement 1 ist konzentrisch zur Mittenlängsachse des Entkopplungselementes ein vorzugsweise zylindrisches, vorzugsweise steifes Gehäuse 4 angeordnet, das nach Art eines Rohrabschnittes ausgebildet sein kann und das Verbindungselement 1 aussen umgibt. Die Erfindung ist jedoch auf eine derartige Konfiguration des Gehäuses 4 nicht beschränkt. Wenn erwünscht, können im Gehäuse 4 gewichtsminimierende Durchbrechungen oder Aussparungen vorgesehen sein.

Ein rohrförmiges Hitzeschutzelement 5 kann am aufstromseitigen Rohranschlussstück 2, z.B. durch Schweissen, befestigt sein. Das Hitzeschutzelement 5 erstreckt sich koaxial inseitig des Verbindungselementes 1 bis vorzugsweise nahe dem abstromseitigen Ende des gewellten Abschnitts des Verbindungseiementes 1. Das Hitzeschutzelement 5 hat die Aufgabe, das Verbindungselement 1, insbesondere dessen gewellten Abschnitt, vor übermässiger Erhitzung durch die durch das Entkopplungselement strömenden Abgase der Brennkraftmaschine zu schützen.

Zwischen dem äusseren Umfang des Verbindungselementes 1, insbesondere längs dessen gewellten Abschnitt, und dem Gehäuse 4 kann ferner eine Dämpfungseinlage 8 (in Fig. 2 durch gestrichelte Linien angedeutet) vorgesehen sein, die aus einem geeigneten schwingungsdämpfenden Material, wie einem Gewirk aus Metalldrähten, gebildet sein kann. Die Dämpfungseinlage 8 könnte, wenn erwünscht, ebenso wie das Hitzeschutzelement 5 weggelassen werden.

Im Bereich seiner axialen Enden ist das Gehäuse 4 über jeweils eine auf- und abstromseitigeGelenkfederanordnung 9, 9' mit wenigstens axialer Nachgiebigkeit mit dem betreffenden Rohranschlussstück 2, 3 verbunden. Jede Gelenkfederanordnung 9, 9' umtasst bei der gezeigten Ausführungsform der Erfindung drei Federeinrichtungen 10, 10', 10". Da die Federeinrichtungen 10, 10', 10" identisch ausgebildet sind, wird nachfolgend nur eine Federeinrichtung 10 näher beschrieben.

Jede Federeinrichtung 10 umfasst jeweils wenigstens ein Blattfederelement, jedoch sind vorzugsweise mehrere übereinander gestapelte Blattfederelemente zu einem Federpaket zusammengefasst. Die Federeinrichtung 10 ist bogenförmig über eine Bogenlänge von etwas mehr als 120° gekrümmt, so dass sich die angrenzenden Endbereiche benachbarter Federeinrichtungen 10 einander überlappen können und die Gesamtheit der Federeinrichtungen der Gelenkfederanordnung 9 das Rohranschlussstück 2 nach Art eines geschlossenen Ringes aussenumfänglich umgeben kann. Trotz der geschlossenen Ringform stellt jede Federeinrichtung 10 weiterhin ein grundsätzlich separates Bauteil dar.

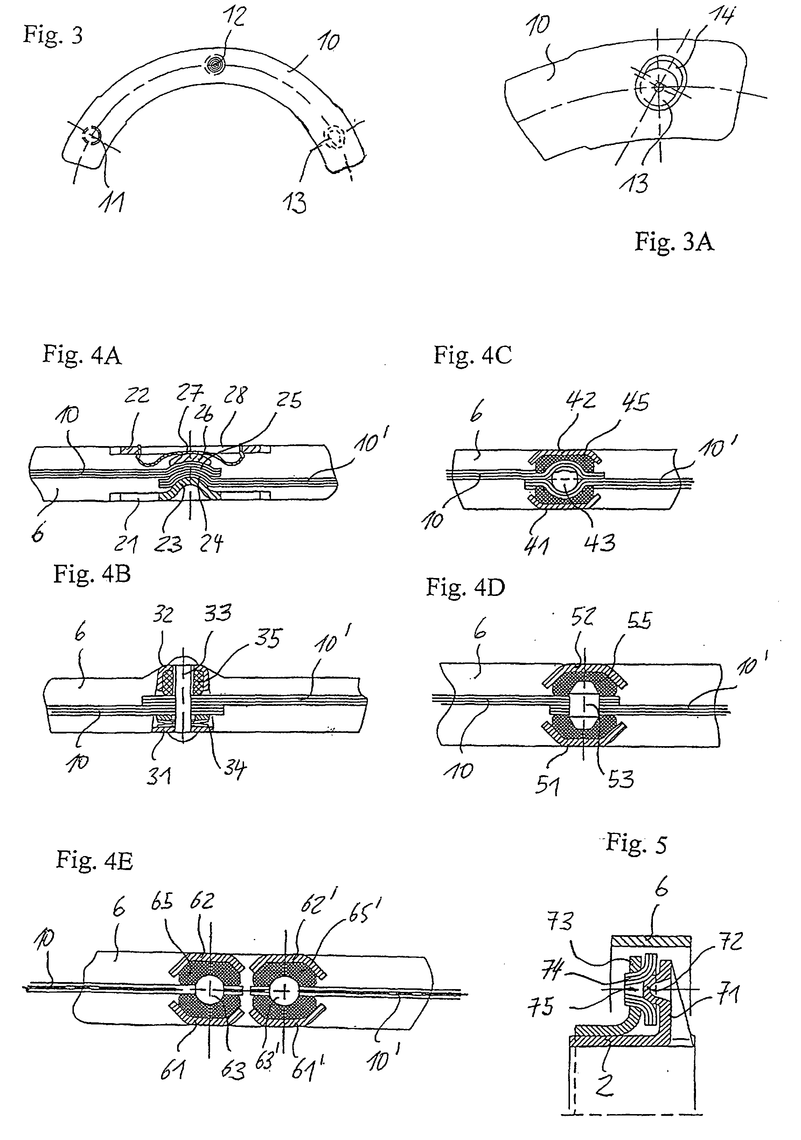

Wie in Fig. 1 und 3 gezeigt ist, hat jede Federeinrichtung 10 drei Kraftübertragungsbereiche 11, 12, 13, über die die Federeinrichtung 10 mit dem Gehäuse 4 bzw. Rohranschlussstück 2 verbunden ist. Das Paar in Umfangsrichtung der Federeinrichtung 10 am weitest voneinander beabstandeter Kraftübertragungsbereiche 11, 13 ist mit dem Gehäuse 4 und der zwischenliegende Kraftübertragungsbereich 12 mit dem Rohranschlussstück 2 verbunden.

Jede Gelenkfederanordnung 9 umfasst demzufolge drei in Umfangsrichtung voneinander beabstandete gehäuseseitige Kraftübertragungsbereiche 11, 13 und drei versetzt zu den gehäuseseitigen Kraftübertragungsbereichen 11, 13 angeordnete, umfänglich voneinander beabstandete Kraftübertragungsbereiche 12 zur Verbindung mit dem Rohranschlussstück 2.

Es versteht sich, dass die Erfindung nicht auf die beschriebene Anzahl an Federeinrichtungen 10 beschränkt ist, sondern Anwendungsfälle möglich sind, bei denen nur zwei symmetrisch zur Mittenlängsachse des Entkopplungselementes angeordnete Federeinrichtungen vorgesehen sind, die einander nicht überlappen brauchen. Auch können mehr als drei Federeinrichtungen 10 vorgesehen sein. Ferner brauchen die Federeinrichtungen 10 nicht notwendigerweise kreissegmentförmig gekrümmt sein, sondern können, wenn erwünscht, auch eine geradlinige Erstreckung haben.

Fig. 3A zeigt einen gehäuseseitigen Kraftübertragungsbereich 13, der mit Spiel behaftet ist, indem sich ein Bolzen oder Stift durch einen Bohrung 14 in einer der Federeinrichtungen 10 erstreckt, die vergrössert ist.

Nachfolgend wird mit Bezug auf Fig. 4A-4D die Ausbildung eines der gehäuseseitigen Kraftübertragungsbereiche 11, 13 näher erläutert. Der andere Kraftübertragungsbereich ist analog ausgebildet. Ein Merkmal jedes Kraftübertragungsbereiches 11 bzw. 13 ist, dass wenigstens eine der sich an dieser Stelle überlappenden Federeinrichtungen 10 in Umfangsrichtung des Entkopplungselementes spielfrei gehalten ist, und dass die Federeinrichtungen 10 in Bezug auf das Gehäuse 4 ebenfalls vorzugsweise spielfrei und elastisch so gehalten sind, dass eine axiale Durchbiegung der Federeinrichtungen 10 am jeweiligen Kraftübertragungsbereich 11 bzw. 13 nicht oder nur unwesentlich beeinträchtigt wird. Eine auf die Federeinrichtungen 10 einwirkende Torsionskraft wird daher auf das Gehäuse 4 übertragen, ohne dass das torsionsempfindliche Verbindungselement 1 hierdurch belastet wird.

Die Kraftübertragung von den Federeinrichtungen 10 auf das Gehäuse 4 erfolgt über einen am Gehäuse 4 befestigten, z. B. angeschweissten Montagering 6, von dem an umfänglich beabstandeten Stellen axial beabstandete Halteansätze radial nach innen ragen, zwischen denen die überlappenden Endbereiche benachbarter Federeinrichtungen 10 aufgenommen sind. Es versteht sich, dass die Erfindung auf diese Art der Kraftübertragung nicht beschränkt ist.

Fig. 4A zeigt eine erste bevorzugte Ausführungsform eines Kraftübertragungsbereichs 11 gemäss der Erfindung. Einer der Halteansätze 21, 22 weist eine kuppenförmige Erhöhung oder Ausformung 23 auf, die sich in Richtung auf den anderen Halteansatz 22 erstreckt und eine annähernd kugelsegmentförmige Konfiguration haben kann. An einem der sich überlappenden Endbereiche der benachbarten Federeinrichtungen 10, 10' ist eine an die oberflächliche Konfiguration der Ausformung 23 abgepasste Erhöhung oder Ausformung 24 ausgebildet, die die Ausformung 23 des Halteansatzes 21 nach Art eines Kugel-Kugelschalengelenkes übergreift. Dadurch ist die beteffende Federeinrichtung 10' in Bezug auf den Halteansatz 21 lagemässig spielfrei positioniert. Am benachbarten überlappenden Endbereich der anderen Federeinrichtung 10 ist eine weitere Erhöhung oder Ausformung 25 vorgesehen, die wiederum an die äussere oberflächliche Konfiguration der Ausformung 24 der einen Federeinrichtung 10' angepasst ist und daher diese nach Art einer Kugelschale übergreift. Die Federeinrichtungen 10, 10' werden hierdurch spielfrei gegeneinander lagemässig positioniert, jedoch ist diese Positionierung aufgrund der grösseren Wirkradien der federseitigen Ausformungen 24, 25 weniger stark ausgeprägt als diejenige zwischen der einen Federeinrichtung 10' und der Ausformung 23 des Halteansatzes 21. Die Ausformungen 23, 24, 25 können durch eine geeignete Umformtechnik, z.B. durch Prägung, in fertigungsgünstiger Weise gebildet werden.

Eine Federvorspanneinrichtung, welche einen oder mehrere Federclip(s) 27 umfasst, wobei sich der Federclip in einer Aussparung 28 im Halteeinsatz 22 abstützt, ist vorgesehen. um die Anordnung aus übereinander angeordneten Ausformungen 24, 25 der Federeinrichtungen 10, 10' gegeneinander und gegen die Ausformung 23 des Halteansatzes 21 federnd vorzuspannen und zusammenzuhalten. Vorzugsweise ist zwischen dem Federclip 27 und der benachbarten Ausformung 25 eine Anlageplatte 26 vorgesehen, um die vom Federclip 26 ausgeübte Vorspannkraft gleichmässig auf die Ausformung 25 zu übertragen.

Die vorbeschriebene Ausführungsform des gehäuseseitigen Kraftübertragungsbereichs schafft eine Spielfreiheit in axialer Richtung des Entkopplungselmentes innerhalb der durch die Höhe der Federvorspannkraft festgelegten Grenzen, indem die Federeinrichtungen 10, 10' aus ihrer gegenseitigen lagemässigen Beziehung nur herausgelangen können, wenn die einwirkenden axialen Beanspruchungen die Federvorspannkraft überwinden. Während des normalen Betriebes des Entkopplungselementes sind die Federeinrichtungen 10, 10' sowohl untereinander als auch in Bezug auf den Halteansatz 21 spielfrei positioniert. Die kugel-kugelschalengelenkartige gegenseitige Kopplung der Federeinrichtungen 10, 10' behindert deren Durchbiegung in Axialrichtung praktisch nicht. Eine auf die Federeinrichtungen 10, 10' ausgeübte Torsionskraft wird über den Halteansatz 21 auf das Gehäuse 4 übertragen, ohne dass das Verbindungselement 1, wie bei den bekannten Entkopplungselementen, einer wenigstens anfänglichen Torsionsbeanspruchung ausgesetzt wird.

Fig. 4B zeigt eine Ausführungsform des gehäuseseitigen Kraftübertragungsbereiches 11 bzw 13, bei der die sich überlappenden Endbereiche angrenzender Federeinrichtungen 10, 10' zueinander ausgerichtete Bohrungen aufweisen, durch die ein Stift oder Bolzen 33 hindurchgeführt ist. Der Stift 33 durchsetzt die Bohrung in einer der Federeinrichtungen 10, 10' mit enger Passung, d.h. im wesentlichen spielfrei, während die Bohrung der anderen Federeinrichtung etwas vergrössert ist, wie dies in Fig. 3A bei 14 gezeigt ist. Der Endbereich dieser Federeinrichtung kann sich daher innerhalb der Abmessungsgrenzen der vergrösserten Bohrung relativ zum Stift 33 und damit relativ zur anderen Federeinrichtung in Umfangsrichtung bewegen. Der Stift 33 durchsetzt ferner Bohrungen in den Halteansätzen 31, 32 des Montagerings 6 und kann mit diesen fest verbunden, z.B. vernietet sein.

Eine Vorspanneinrichtung in Gestalt eines von einem der Halteeinsätze 31, 32 aufgenommenen Drahtgewirkes 35 an einer Seite der übereinander liegenden Endbereiche der Federeinrichtungen 10, 10' und einer Tellerfeder 34 an der anderen Seite beaufschlagt die Endbereiche der Federeinrichtungen 10, 10' mit einer axialen Vorspannkraft, um einerseits die Federeinrichtungen 10, 10' an den Halteansätzen 31, 32 zu montieren und andererseits eine Relativbewegung einer der Federeinrichtungen 10, 10' gegenüber der anderen in Umfangsrichtung gegen die durch die Vorspannkraft hervorgerufene Reibkraft zu ermöglich ist, ohne dass die axiale Durchbiegung der Federeinrichtungen 10, 10' durch die spielfreie Montage in nennenswerter Weise behindert wird.

Fig. 4C zeigt eine weitere Ausführungsform eines gehäuseseitigen Kraftübertragungsbereichs 11 bzw. 13, bei der die überlappenden Endbereiche benachbarter Federeinrichtungen 10. 10' zwischen sich ein kugelförmiges Kupplungselement 43 formschlüssig einschliessen. Ein Drahtgewirk 45 ist zwischen den Halteansätzen 41, 42 des Montagerings 6 eingespannt. Innerhalb der Grenzen der vom Drahtgewirk 45 auf die überlappenden Endbereiche der Federeinrichtungen 10, 10' und dem dazwischen gehaltenen Kupplungselement 43 ausgeübten Vorspannkraft schafft diese Ausführungsform der Erfindung Spielfreiheit in Axial- und Umfangsrichtung des Entkopplungselementes, ohne dass die Durchbiegung der Federeinrichtungen 10, 10' in axialer Richtung beeinträchtigt wird.

Fig. 4D zeigt eine weitere Ausführungsform eines gehäuseseitigen Kraftübertragungsbereichs 11 bzw. 13, die ähnlich der Ausführungsform nach Fig. 4B ausgebildet ist, indem ein Stift 53 in zueinander ausgerichteten Bohrungen in den einander überlappenden Endbereichen der Federeinrichtungen 10, 10' eingesetzt ist. In einer der Bohrungen sitzt der Stift 53 bündig bzw. im wesentlichen spielfrei ein, während die andere Bohrung etwas vergrössert ist, vgl. Fig. 3A, so dass die Federeinrichtungen 10, 10' eine Relativbewegung in Umfangsrichtung zueinander vornehmen können. Zwischen den vom Montagering 6 radial abstehenden Halteansätzen 51, 52 ist ein Drahtgewirk 55 eingespannt, das auf die überlappenden Endbereiche der Federeinrichtungen 10, 10' eine Vorspannkraft ausübt und gleichzeitig den Stift 53 lagemässig positioniert. Die mit dieser Ausführungsform erzielten Wirkungen sind ähnlich denen der Ausführungsform nach Fig. 4B, so dass hierauf verwiesen werden kann.

Bei den in Fig. 4A, 4B und 4D gezeigten Ausführungsformen von gehäuseseitigen Kraftübertragungsbereichen 11, 13 versteht es sich, dass die Positionierung der Federeinrichtungen gegenüber den Halteansätzen am einen Kraftübertragungsbereich 11 in umgekehrter axialer Reihenfolge zu derjenigen am anderen Kraftübertragungsbereich 13 ist, d.h. jede Federeinrichtung ist an einem Kraftübertragungsbereich in Umfangsrichtung fest und am anderen Kraftübertragungsbereich relativbeweglich gehalten.

Schliesslich zeigt Fig. 4E eine Ausführungsform eines gehäuseseitigen Kraftübertragungsbereiches 11 bzw. 13, die sich von den vorhergehenden Ausführungsformen nach Fig, 4A-4D darin unterscheidet, dass sich die Endbereiche benachbarter Federeinrichtungen 10, 10' nicht überlappen, sondern in Abstand voneinander gehalten sind. In einer Bohrung im Endbereich jeder Federeinrichtung 10 bzw. 10' ist ein Kugelelement 63, 63' positioniert, das in einem umgebenden Drahtgewirk 65, 65' eingebettet ist. Das Drahtgewirk 65, 65' ist zwischen vom Montagering 6 abstehenden Halteansätzen 61, 62 bzw. 61', 62' eingespannt. Jede Federeinrichtung 10 bzw. 10' ist daher in Umfangs- und Axialrichtung innerhalb der durch die Vorspannkraft des Drahtgewirkes 65, 65' definierten Grenze spielfrei elastisch fixiert und kann sich praktisch dadurch ungehindert in axialer Richtung durchbiegen.

Nachfolgend wird auf Fig. 5 Bezug genommen, die eine bevorzugte Ausführungsform des Kraftübertragungsbereiches 12 an der zwischenliegenden Stelle jeder Federeinrichtung 10 zeigt. Die Kraftübertragung zwischen der Federeinrichtung 10 und dem benachbarten Rohranschlussstück 2 ist spielfrei und vorzugsweise frei von Federelastitzitäten, so dass auf das Rohranschlussstück 2 einwirkende Beanspruchungen, insbesondere Torsionsbeanspruchungen, praktisch "starr" auf die Federeinrichtung en10 übertragen werden.

Der Kraftübertragungsbereich 12 umfasst eine radiale flanschartige Abwinklung 71 des Rohranschlussstückes 2 mit einer darin durch eine geeignete Umformtechnik, z.B. Prägung, eingebrachte Erhöhung oder Ausbuchtung 72. Die Ausbuchtung 72 greift in eine kelchförmige Stanzbohrung 75 ein, die in der Federeinrichtung 10 ausgerichtet zur Ausbuchtung 72 eingebracht ist und an der der Ausbuchtung 72 abgewandten Seite der Federeinrichtung 10 durch eine axial abstehende Bördelwand 74 begrenzt ist. Die Bördelwand 74 greift ihrerseits in eine Bohrung in einem radial sich erstreckenden Halteprofil 73 ein, das am Rohranschlussstück 2, z.B. durch Schweisen, befestigt ist. Nach Positionierung der Teile wird die Federeinrichtung 10 zwischen der Abwinklung 71 und dem Halteprofil 73 spielfrei fest, jedoch vorzugsweise nicht drehfest, eingeklemmt, so dass auf das Rohranschlusstück 2 wirkende Torsions- und Axialkräfte spielfrei auf die Federeinrichtung 10 übertragen werden. Als Alternative zur vorbeschriebenen Ausführungsform des Kraftübertragungbereiches 12 könnte die Anordnung aus der flanschartigem Abwinklung 71, Federeinrichtung 10 und Halteprofil 73 auch durch einen sie durchsetzenden Niet fest verbunden sein, oder diese Verbindung beruht alleine auf einem Formpressvorgang. Wie erwähnt sollte die Verbindung zwar spielfrei, jedoch nicht starr sein, so dass eine winkelmässige Verlagerung der Federeinrichtung 10 gegenüber dem Rohranschlussstück 2 möglich ist. Nietfreie Verbindungen werden wegen der besseren Fertigungsmöglichkeit und höheren Betriebszuverlässigkeit bevorzugt.

Obschon die Erfindung vorausgehend anhand bevorzugter Ausführungsformen beschrieben wurde, versteht es sich, dass sie darauf nicht beschränkt ist. Andere sich dem Fachmann anhand der gegebenen Lehre anbietende Möglichkeiten des Aufbaues der Kraftübertragungsbereiche, mit denen jede Federeinrichtung mit dem Gehäuse bzw. Rohranschlussstück verbunden ist, können vorgesehen werden, vorausgesetzt, diese schaffen eine weitestgehend spielfreie Übertragung wenigstens der einwirkenden Torsionsbeanspruchungen vom Rohranschlussstück auf das Gehäuse unter Entlastung des balgartigen Verbindungselementes. Eine weitere Anforderung an die Kraftübertragungsbereiche ist, dass dadurch die Durchbiegung der Federeinrichtungen in Axialrichtung des Entkopplungselementes nicht oder nur geringfügig beeinträchtigt werden soll, so dass das Federverhalten jeder Federeinrichtung und damit der Gelenkfederanordnung insgesamt gut vorherbestimmt werden kann. Vorzugsweise ist jede Gelenkfederanordnung umfänglich vom Gehäuse bzw. dem daran befestigten Montagering abgedeckt und dadurch gegen Beschädigungen weitestgehend geschützt. Wenn erwünscht, könnte das Gehäuse bzw. der Montagering radial nach innen auf das betreffende Rohranschlussstück abgewinkelt sein, so dass die Gelenkfederanordnungen auch weitgehend abgeschirmt wären. Gleichzeitig würde dadurch ein wirksamer Schutz gegen eine übermässige axiale Auslenkung der Federeinrichtungen geschaffen.

## Patentansprüche

1. Entkopplungselement für Schwingungen in Rohrleitungen, insbesondere Abgasanlagen von Brennkraftmaschinen, mit einem Paar axial beabstandeter, durch ein flexibles, insbesondere balgartiges Verbindungselement (1) miteinander verbundener Rohranschlusstücke (2,3) und einer Kraftübertragungseinrichtung mit wenigstens axialer Nachgiebigkeit zur Übertragung von Kräften zwischen den Rohranschlusstücken unter Umgehung des flexiblen Verbindungselementes, welche ein das flexible Verbindungselement umgebendes Gehäuse (4) umfasst, das wenigstens im Bereich eines seiner axialen Enden durch eine, wenigstens ein Paar Federeinrichtungen (10) umfassende Gelenkfederanordnung (9) mit einem benachbarten Rohranschlussstück verbunden ist, wobei jede wenigstens ein längliches Blattfederelement aufweisende Federeinrichtung an ihren umfänglich des Entkopplungselementes beabstandeten Endbereichen (11,13) am Gehäuse und an einem Zwischenbereich (12) zwischen den Endbereichen am Rohranschlussstück in kraftübertragender Weise gehalten ist, **dadurch gekennzeichnet, dass** die Federeinrichtung (10) an dem Zwischenbereich (12) und an einem der Endbereiche (11,13) am Rohranschlussstück bzw. Gehäuse wenigstens in Umfangsgsrichtung des Entkopplungselementes im wesentlichen spielfrei und am anderen Endbereich am Gehäuse (4) mit Spiel in der Ebene der Federeinrichtung gehalten ist.

2. Entkopplungselement nach Anspruch 1, **dadurch gekennzeichnet, dass** die Federeinrichtung (10) kreissegmentförmig ausgebildet ist.

3. Entkopplungselement nach Anspruch 2, **dadurch gekennzeichnet, dass** angrenzende Endbereiche benachbarter Federeinrichtungen (10) einander überlappen.

4. Entkopplungselement nach einem der vorhergehenden Ansprüche, **dadurch gekennzeichnet, dass** die Federeinrichtung (10) an wenigstens einem der endseitigen Kraftübertragungsbereiche (11,13) mit einer im wesentlichen in axialer Richtung des Entkopplungselementes wirkenden Vorspannkraft beaufschlagt ist.

5. Entkopplungselement nach Anspruch 3 und 4 **dadurch gekennzeichnet**, **dadurch gekennzeichnet, dass** jeder Endbereich wenigstens eine Ausformung (24,25) aufweist, wobei die Ausformungen der überlappenden Endbereiche benachbarter Federeinrichtungen (10) lagepositionierend zueinander und zu einer gehäusseitigen Ausformung (23) ausgerichtet und durch die Vorspannkraft in Eingriff miteinander vorgespannt sind .

6. Entkopplungselement nach Anspruch 5, **gekennzeichnet durch** eine zwischen dem Gehäuse (4) und den überlappenden Endbereichen angeordnete Federclipeinrichtung (26-28) zum Aufbringen der Vorspannkraft.

7. Entkopplungselement nach einem der Ansprüche 1 bis 4, **dadurch gekennzeichnet, dass** die überlappenden gegeneinander vorgespannten Endbereiche benachbarter Federeinrichtungen (10) zwischen sich ein Kugelelement (43) einschliessen.

8. Entkopplungselement nach einem der Ansprüche 1 bis 4, **dadurch gekennzeichnet, dass** die überlappenden gegeneinander vorgespannten Endbereiche benachbarter Federeinrichtungen (10) zueinander ausgerichtete Bohrungen aufweisen, in die ein Positionierungsstift (33,53) eingesetzt ist.

9. Entkopplungselement nach einem der Ansprüche 1, 2 und 4, **dadurch gekennzeichnet, dass** jede Federeinrichtung (10) unabhängig von einer benachbarten Federeinrichtung am Gehäuse (4) gehalten ist.

10. Entkopplungselement nach einem der vorhergehenden Ansprüche, **dadurch gekennzeichnet, dass** die Federeinrichtung (10) mit dem betreffenden Rohranschlussstück (2,3) frei von Federelastizitäten spielfrei verbunden ist.

11. Entkopplungselement nach Anspruch 10, **dadurch gekennzeichnet, dass** die Federeinrichtung (10) zwischen Flanschbereichen des Rohranschlussstückes (2,3) verpresst ist.

12. Entkopplungselement nach einem der vorhergehenden Ansprüche, **dadurch gekennzeichnet, dass** die Federeinrichtungen (10) so zueinander ausgerichtet sind, dass sie das Rohranschlussstück (2,3) nach Art eines geschlossenen Ringes umgeben.

## Claims

1. A decoupling element for vibrations in conduits, in particular in exhaust systems of internal combustion engines, including a pair of axially spaced conduit connecting members (2,3) interconnected with each other by a flexible, in particular bellows-type connecting element (1), and a force transmitting means having at least axial elasticity for transferring forces between said conduit connecting members whilst by-passing the flexible connecting element, said force transmitting means comprising a housing (4) surrounding said flexible connecting element and connected near at least one axial end thereof to an adjacent conduit connecting member by an articulated spring assembly (9) having at least a pair of spring means (10), each spring means comprising at least one elongated leaf spring element and being mounted on the end portions (11,13) thereof to said housing, said spring means being spaced from each other in the circumferential direction of the decoupling element, and on an intermediate portion (12) thereof between said end portions to the conduit connecting member in load transmitting manner, **characterized in that** said spring means (10) on the intermediate portion (12) and on one of the end portions (11,13) thereof is mounted to said conduit connecting member and housing, respectively, essentially free from play at least in the circumferential direction of the decoupling element, and on the other end portion to said housing (4) with play in the plane of the spring means.

2. The decoupling element according to claim 1, **characterized in that** said spring means (10) in the longutidinal direction thereof is in the form of a segment of a circle.

3. The decoupling element according to claim 2, **characterized in that** adjacent end portions of adjacent spring means (109 overlap each other.

4. The decoupling element according to one of the preceding claims, **characterized in that** the spring means (10) on at least one of said end-side force transmitting portions (11,13) thereof is loaded by a bias force effective essentially in the axial direction of the decoupling element.

5. The decoupling element according to claim 3 and 4, **characterized in that** each of said end portions has formed thereon at least a single domed portion (24,25), whereby the domed portions of the overlapping end portions of adjacent spring means (10) are positionally aligned with each other and with a housing-end domed portion (23), and biased into interengagement with each other by said bias force.

6. The decoupling element according to claim 5, **characterized in that** an elastic clip means (26-28) is provided between the housing (4) and the overlapping end portions for applying said bias force thereto.

7. The decoupling element according to one of the claims 1 to 4, **characterized in that** a ball element (43) is sandwiched between the end portions overlapping and biased against each other of adjacent spring means (10).

8. The decoupling element according to one of the claims 1 to 4, **characterized in that** the end portions overlapping and biased against each other of adjacent spring means (10) include holes aligned with each other, in which a positioning pin (33,53) is inserted.

9. The decoupling element according to one of the claims 1, 2 and 4, **characterized in that** each spring means (109 is mounted to said housing (4) independently of an adjacent spring means.

10. The decoupling element according to one of the preceding claims, **characterized in that** said spring means (10) is connected to the corresponding conduit connecting member (2,3) free of play and free of spring elasticity.

11. The decoupling element according to claim 10, **characterized in that** said spring means (10) is press-fitted between a pair of flange portions of said conduit connecting member (2,3).

12. The decoupling element according to one of the preceding claims, **characterized in that** the spring means (10) are aligned with each other for surrounding the adjacent conduit connecting member (2,3) in the manner of a closed ring.

## Revendications

1. Elément de découplage pour des vibrations dans des conduites tubulaires, notamment dans des installations de gaz d'échappement de moteurs à combustion interne, comportant une paire d'éléments de raccordement tubulaires (2, 3) reliés entre eux par un élément de liaison flexible (1), notamment en forme de soufflet, et un dispositif de transmission de force présentant au moins une flexibilité axiale pour la transmission de force entre les éléments de raccordement tubulaires avec contournement de l'élément de liaison flexible, et qui comprend un boîtier (4) entourant l'élément de liaison flexible et qui, au moins dans la zone de l'une de ses extrémités axiales, est reliée à un élément de raccordement tubulaire voisin par un dispositif à ressorts articulés (9) comprenant une paire de dispositif à ressort (10), chaque dispositif à ressort, qui comprend au moins un élément de ressort à lame allongé, étant retenu selon une liaison de transmission de force au niveau de ses parties d'extrémité (11, 13) distantes sur la périphérie de l'élément de découplage, sur le boîtier et au niveau d'une zone intercalaire (12) entre les parties d'extrémité sur l'élément de raccordement tubulaire, **caractérisé en ce que** le dispositif à ressort (10) est retenu essentiellement sans jeu au niveau de la zone intercalaire (12) et au niveau de l'une des parties d'extrémité (11, 13) sur l'élément de raccordement tubulaire ou sur le boîtier, au moins dans la direction circonférentielle de l'élément de découplage, et est retenu avec jeu au niveau de l'autre partie d'extrémité sur le boîtier (4) dans le plan du dispositif à ressort.

2. Elément de découplage selon la revendication 1, **caractérisé en ce que** le dispositif à ressort (10) est agencé sous la forme d'un segment de cercle.

3. Elément de découplage selon la revendication 2, **caractérisé en ce que** des parties d'extrémité contiguës de dispositifs à ressort voisins (10) se chevauchent.

4. Elément de découplage selon l'une des revendications précédentes, **caractérisé en ce que** le dispositif à ressort (10) est chargé, au niveau d'au moins l'une des parties d'extrémité (12, 13) de transmission de force, par une force de précontrainte qui agit essentiellement dans la direction axiale de l'élément de découplage.

5. Elément de découplage selon les revendications 3 et 4, **caractérisé en ce que** chaque partie d'extrémité comporte au moins une moulure (24, 25), les moulures des parties d'extrémité en chevauchement de dispositifs à ressort voisins (10) étant orientées en étant positionnées entre elles et par rapport à une moulure (23) située côté boîtier et étant précontraintes de manière à engrener entre elles sous l'effet de la force de précontrainte.

6. Elément de découplage selon la revendication 4, **caractérisé par** un dispositif à pinces élastiques (26-28) disposée entre le boîtier (4) et les parties d'extrémité en chevauchement, pour appliquer la force de précontrainte.

7. Elément de découplage selon l'une des revendications 1 à 4, **caractérisé en ce que** les parties d'extrémité en chevauchement, précontraintes l'une contre l'autre, de dispositifs à ressort voisins (10) enserrent entre elles un élément sphérique (43).

8. Elément de découplage selon l'une des revendications 1 à 4, **caractérisé en ce que** les parties d'extrémité en chevauchement, précontraintes l'une contre l'autre, de dispositifs à ressort voisins (10) possèdent des perçages alignés entre eux et dans lesquels est insérée une tige de positionnement (33, 53).

9. Elément de découplage selon l'une des revendications 1, 2 et 4, **caractérisé en ce que** chaque dispositif à ressort est retenu indépendamment d'un dispositif à ressort voisin sur le boîtier (4).

10. Elément de découplage selon l'une des revendications précédentes, **caractérisé en ce que** le dispositif à ressort (10) est relié sans jeu à l'élément de' raccord tubulaire considéré (2, 3), d'une manière exempte d'élasticités des ressorts.

11. Elément de découplage selon la revendication 10, **caractérisé en ce que** le dispositif à ressort (10) est serré entre des parties de bride de l'élément de raccordement tubulaire (2, 3).

12. Elément de découplage selon l'une des revendications précédentes, **caractérisé en ce que** les dispositifs à ressort (10) sont alignés entre eux de telle sorte qu'ils entourent l'élément de raccordement tubulaire (2, 3) à la manière d'un anneau fermé.
